# EUROPÄISCHE PATENTSCHRIFT

(11) **EP 0 345 623 B1**
(45) Veröffentlichungstag und Bekanntmachung des Hinweises auf die Patenterteilung: **12.01.1994**
(21) Anmeldenummer: 89109840.2
(22) Anmeldetag: 31.05.1989
(51) Int. Cl.: H04Q 3/52

(54) **Breitbandsignal-Koppeleinrichtung**
Switching device for broad-band signals
Dispositif de commutation pour signaux à large bande

(30) Priorität: 08.06.1988 DE 3819491
(43) Veröffentlichungstag der Anmeldung: 13.12.1989
(73) Patentinhaber: SIEMENS AKTIENGESELLSCHAFT, 80333 München (DE)
(72) Erfinder: Hofmann, Rüdiger, Dr., D-8031 Gilching (DE)

(56) Entgegenhaltungen:
- EP-A- 0 217 601
- EP-A- 0 264 046

## Beschreibung

Läßt sich die ECL-Technik durch Eigenschaften wie hohe Arbeitsgeschwindigkeit, (mittel-)hoher Integrationsgrad und (mittel-)hohe Verlustleistung charakterisieren, so zeichnet sich die FET-Technik - bei demgegenüber allerding nur mittleren Arbeitsgeschwindigkeiten - durch einen sehr hohen Integrationsgrad und sehr niedrige Verlustleistungen aus. Diese letzteren Eigenschaften führen zu dem Bemühen, mit integrierten Schaltungen in FET-Technik auch in bislang der Bipolar-Technik vorbehaltene Geschwindigkeitsbereiche vorzudringen.

Für eine Breitbandsignal-Koppeleinrichtung mit einer Koppelpunktmatrix, die jeweils mit zwei Signalleitern gebildete Matrixeingangsleitungen aufweist, welche einerseits jeweils an zwei Differenz-(Komplementär-)ausgänge einer Eingangsdigitalsignalschaltung angeschlossen sind und andererseits über Koppelpunkte mit ebenfalls jeweils mit zwei Signalleitern gebildeten Matrixausgangsleitungen verbindbar sind, welche jeweils mit ihren beiden Signalleitern zu den beiden Signaleingängen einer mit einem Differenzverstärker gebildeten Ausgangsverstärkerschaltung führen, ist in diesem Zusammenhang (aus EP-A-0 264 046) eine in FET-Technik ausgebildete Koppelpunktmatrix mit in den Koppelpunkten vorgesehenen, jeweils mit zwei jeweils an der Steuerelektrode mit einem Durchschalte- bzw. Sperrsignal beaufschlagten Schalter-Transistoren gebildeten Koppelelementpaaren bekannt, deren Schalter-Transistoren jeweils mit einer Hauptelektrode an den einen bzw. anderen Signalleiter der zugehörigen Matrixausgangsleitung angeschlossen sind, die ihrerseits mit einem Ausgangs-Differenzverstärker mit Kippverhalten versehen ist, wobei die Koppelelementpaare jeweils zwei jeweils mit einem Schalter-Transistor eine Serienschaltung bildende Vorschalt-Transistoren aufweisen, die jeweils mit
der Steuerelektrode an den einen bzw. den anderen Signalleiter der zugehörigen Matrixeingangsleitung angeschlossen sind und deren jeweilige der Serienschaltung abgewandte Hauptelektrode über einen Abtast-Transistor mit dem einen Anschluß (Masse) der Betriebsspannungsquelle verbunden ist, mit deren anderen Anschluß jeder Signalleiter der jeweiligen Matrixausgangsleitung jeweils über einen Vorlade-Transistor verbunden ist,
und wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluss der Betriebsspannungsquelle herrschende Potential geladen werden.
Diese bekannte Breitbandsignal-Koppeleinrichtung bringt zusätzlich zu den Vorteilen, die mit einer in FET-Technik gehaltenen Koppelpunktmatrix verbunden sind, den weiteren Vorteil mit sich, daß einerseits - bei gesperrtem Koppelpunkt - auch ohne zusätzliche Dämpfungsmaßnahmen keine störende Signale über den Koppelpunkt zum Matrixausgang gelangen und daß andererseits - bei leitendem Koppelpunkt - bei der eigentlichen Bitdurchschaltung ggf. stattfindende Umladungen der Matrixausgangsleitung stets von dem dem einen Signalzustand entsprechenden einen Betriebspotential ausgehend in nur einer Umladerichtung vor sich gehen und somit bereits mit einer (dem Überschreiten einer diesem Betriebspotentialwert benachbarten, dem Kippunkt des Differenzverstärkers entsprechenden Schwelle entsprechenden) kleinen Umladung - und damit entsprechend schnell - ein eindeutiger Übergang des am Ausgang der Koppeleinrichtung auftretenden, durchgeschalteten Digitalsignals von dem einen in den anderen Signalzustand verbunden ist.

Die Erfindung stellt sich nun die Aufgabe, bei einer solchen Breitbandsignal-Koppeleinrichtung eine weitere Erhöhung der Arbeitsgeschwindigkeit zu ermöglichen.

Die Erfindung betrifft somit eine Breitbandsignal-Koppeleinrichtung mit einer Koppelpunktmatrix in FET-Technik, die jeweils mit zwei Signalleitern gebildete Matrixeingangsleitungen aufweist, deren jeweils beiden Signalleiter einerseits jeweils an die beiden Differenz-(Komplementär-)ausgänge einer zwei solche Differenz-(Komplementär-)ausgänge aufweisenden Eingangsdigitalsignalschaltung angeschlossen sind und andererseits über die mit Koppelelementpaaren gebildeten Koppelpunkte mit ebenfalls jeweils mit zwei Signalleitern gebildeten Matrixausgangsleitungen verbindbar sind, die jeweils mit ihren beiden Signalleitern zu den beiden Signaleingängen einer mit einem Differenzverstärker mit Kippverhalten gebildeten Ausgangsverstärkerschaltung führen,
wobei die Koppelelementpaare jeweils mit zwei jeweils an der Steuerelektrode mit einem Durchschalte- bzw. Sperrsignal beaufschlagten und mit einer Hauptelektrode an den einen bzw. anderen Signalleiter der zugehörigen Matrixausgangsleitung angeschlossenen Schalter-Transistoren gebildet sind,
wobei die Koppelelementpaare jeweils zwei jeweils mit einem Schalter-Transistor eine Serienschaltung bildende Vorschalt-Transistoren aufweisen,
die jeweils mit der Steuerelektrode an den einen bzw. den anderen Signalleiter der zugehörigen Matrixeingangsleitung angeschlossen sind und deren jeweilige der Serienschaltung abgewandte Hauptelektrode über einen Abtast-Transistor mit dem einen Anschluß der Betriebsspannungsquelle verbunden ist, mit deren anderen Anschluß jeder Signalleiter der jeweiligen Matrixausgangsleitung jeweils über einen Vorlade-Transistor verbunden ist,
und wobei Vorlade-Transistoren und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor beide Signalleiter der Matrixausgangsleitung über den jeweiligen Vorlade-Transistor zumindest angenähert auf das an dem genannten anderen Anschluß der Betriebsspannungsquelle herrschende Potential geladen werden; diese Breitbandsignal-Koppeleinrichtung ist erfindungsgemäß dadurch gekennzeichnet, daß die beiden Vorlade-Transistoren an ihren der jeweiligen Matrixausgangsleitung zugewandten Hauptelektroden miteinander über einen Quertransistor verbunden sind, dessen Steuerelektrode mit den Steuerelektroden der Vorlade-Transistoren verbunden ist.

Die Erfindung bringt in Verbindung mit dem Vorteil einer Beschleunigung der Vorladung der Matrixausgangsleitungen den weiteren Vorteil einer sehr frühzeitigen Potentialsymmetrierung der Matrixausgangsleitungen mit sich, so daß auch entsprechend frühzeitig die Anfangsbedingungen für eine sichere Verstärkung durch einen nachfolgenden Differenzverstärker gegeben sind.

Eine weitere Erhöhung der Arbeitsgeschwindigkeit der Breitbandsignal-Koppeleinrichtung erhält man, wenn in weiterer Ausgestaltung der Erfindung neben einem matrixeingangsleitungs-individuellen Abtast-Transistor ein matrixeingangsleitungs-individueller Vorlade-Transistor oder, alternativ dazu, neben einem matrixausgangsleitungs-individuellen Abtast-Transistor ein matrixausgangsleitungs-individueller Vorlade-Transistor vorgesehen ist.

Weitere Besonderheiten der Erfindung werden aus der nachfolgenden näheren Erläuterung der Erfindung anhand der Zeichnung ersichtlich. Dabei zeigt
- FIG 1: das Schema einer Breitbandsignal-Koppeleinrichtung;
- FIG 2, FIG 3 und FIG 4: zeigen Beispiele der schaltungstechnischen Realisierung ihrer Koppelelemente gemäß der Erfindung, und
- FIG 5: verdeutlicht Signalverläufe darin.

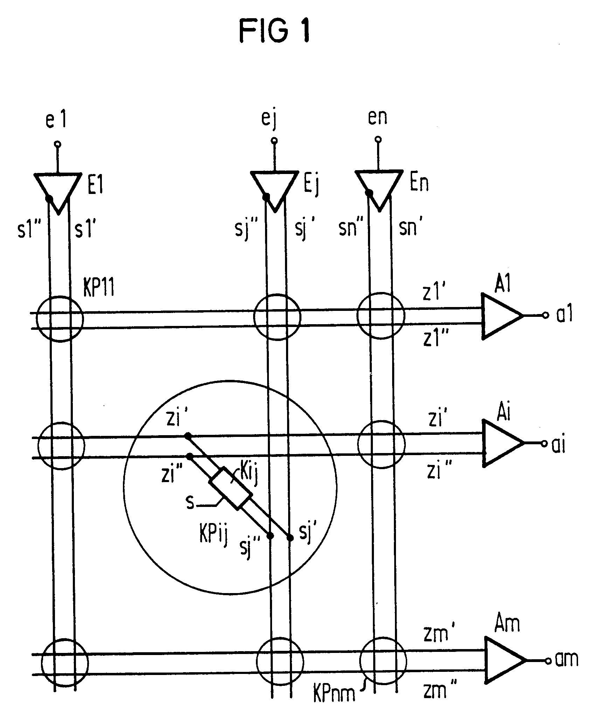

In der Zeichnung FIG 1 ist schematisch eine (aus EP-A-0 264 046) bekannte Breitbandsignal-Koppeleinrichtung skizziert, an deren zu Spaltenleitungen s1...sj...sn einer Koppelpunktmatrix führenden Eingängen e1...ej...en Eingangsdigitalsignalschaltungen E1...Ej...En vorgesehen sind und deren von Zeilenleitungen z1...zi...zm der Koppelpunktmatrix erreichte Ausgänge a1...ai...am mit Ausgangsverstärkerschaltungen A1...Ai...Am versehen sind. Die Koppelpunktmatrix weist Koppelpunkte KP11...KPij...KPmn auf, deren Koppelelemente, wie dies beim Koppelpunkt KPij für ein Koppelelementepaar Kij weiter ins Einzelne gehend angedeutet ist, jeweils an einem Steuereingang s von einem (in der Zeichnung nicht mehr dargestellten) Adressendecoderelement oder Halte-Speicherelement gesteuert sein können, was hier indessen nicht weiter erläutert werden muss, da derartige Ansteuerungen von Koppelelementen allgemein bekannt sind und entsprechende Erläuterungen sich im übrigen auch schon an anderer Stelle finden (DE-P 36 31 634.2).

Die Matrixeingangsleitungen (Spaltenleitungen) sind jeweils mit zwei Signalleitern s1′,s1˝; ...;sj′,sj˝;...;sn′,sn˝ gebildet, die jeweils an Komplementär-(Differenz-)ausgänge der jeweils zugehörigen, in FIG 1 als Verstärker mit einem nichtinvertierenden und einem invertierenden Ausgang, d.h. als sog. Differenz-Leitungstreiber dargestellten Eingangsdigitalsignalschaltung El,...,Ej,..., En angeschlossen sind. Die so einerseits von den Komplementärausgängen der Eingangsdigitalsignalschaltungen E1,..., Ej,..., En ausgehenden Matrixeingangsleitungen (Spaltenleitungen) s1′,s1˝;...; sj′,sj˝;... ...;sn′,sn˝ sind andererseits über mit Koppelelementepaaren (Kij beim Koppelpunkt KPij in FIG 1) gebildete Koppelpunkte KP11,...,KPij,...,KPnm mit Matrixausgangsleitungen (Zeilenleitungen) verbunden, die ebenfalls jeweils mit zwei Signalleitern z1′, z1˝;...;zi′,zi˝; ...;zm′,zm˝ gebildet sind und mit diesen jeweils zu den beiden Signaleingängen einer mit einem Differenzverstärker mit Kippverhalten gebildeten Ausgangsverstärkerschaltung A1,.., Ai,...,Am führen.

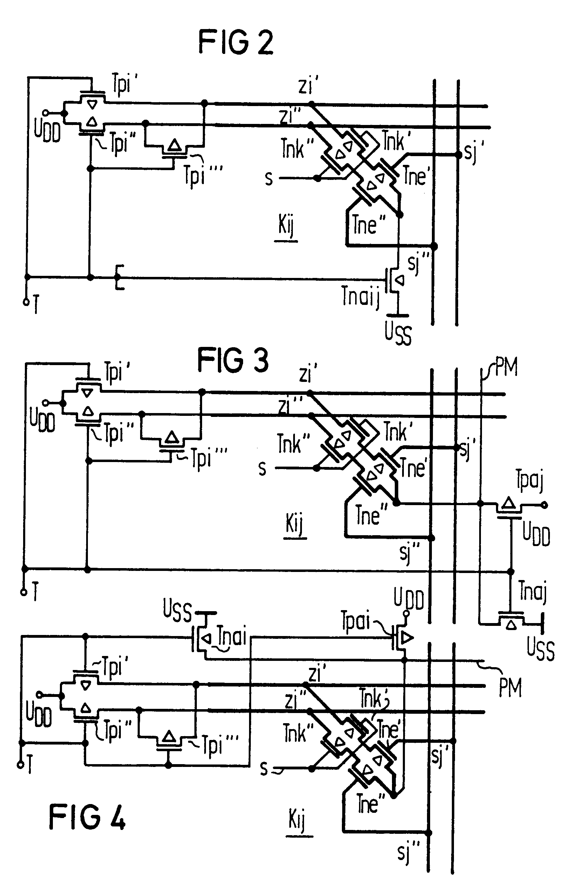

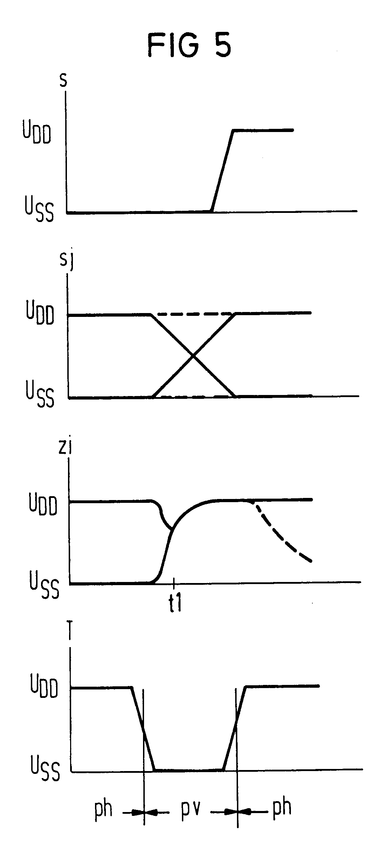

Ein solcher Differenzverstärker mit Kippverhalten kann mit einem sog. gated flip-flop realisiert werden, wie es im Prinzip (aus |a| IEEE Journal of Solid-State Circuits, Oct. 1973, 319...323, Fig.6) und auch schon in verschiedenen Modifikationen (beispielsweise aus |b| DE-OS 24 22 136, Fig.3 (16′) und aus |c| DE-OS 26 08 119, FIG.5) bekannt ist, wobei ein dort vorgesehener Symmetriertransistor (in|a|und|b|) ebenso wie dort vorgesehene Vorladetransistoren (in|b|) bzw. Lasttransistoren (in |c|) zweckmäßigerweise als p-Kanal-Transistor auszubilden ist; eine weitere Realisierungsmöglichkeit ist aus EP-A-0 264 046, FIG 5, bekannt.

Wie die Koppelelementepaare ...Kij... schaltungstechnisch realisiert sein können, wird in FIG 2, FIG 3 und FIG 4 verdeutlicht: Die jeweils mit zwei jeweils an der Steuerelektrode mit einem Durchschalte- bzw. Sperrsignal beaufschlagten und mit einer Hauptelektrode an den einen bzw. den anderen Signalleiter zi′,zi˝ der zugehörigen Matrixausgangsleitung angeschlossenen Schalter-Transistoren Tnk′,Tnk˝ gebildeten Koppelelementepaare ...Kij... weisen jeweils zwei jeweils mit einem Schalter-Transistor Tnk′ bzw. Tnk˝ eine Serienschaltung bildende Vorschalt-Transistoren Tne′ und Tne˝ auf, die jeweils mit der Steuerelektrode an den einen Signalleiter sj′ bzw. den anderen Signalleiter sj˝ der zugehörigen Matrixeingangsleitung (Spaltenleitung) ... sj... angeschlossen sind und deren jeweilige der Serienschaltung abgewandte Hauptelektrode über einen Abtast-Transistor Tna (nämlich Tnaij in FIG 2 bzw. Tnaj in FIG 3 bzw. Tnai in FIG 4) mit dem einen Anschluß U_{SS} (Masse) der Betriebsspannungsquelle verbunden ist. Mit dem anderen Anschluß U_{DD} der Betriebsspannungsquelle sind die beiden Signalleiter (zi′,zi˝) der jeweiligen Matrixausgangsleitung (Zeilenleitung) ...zi... jeweils über einen Vorlade-Transistor Tpi′ bzw. Tpi˝ verbunden; an ihren der jeweiligen Matrixausgangsleitung (zi′, zi˝) zugewandten Hauptelektroden sind die beiden Vorlade-Transistoren Tpi′, Tpi˝ miteinander über einen Quertransistor Tpi‴ verbunden, dessen Steuerelektrode mit den Steuerelektroden der Vorlade-Transistoren Tpi′, Tpi˝ verbunden ist.

Wie dies auch FIG 2 verdeutlicht, kann jeweils ein koppelelementepaar-individueller Abtast-Transistor Tnaij vorgesehen sein; alternativ kann aber auch, wie dies FIG 3 zeigt, jeweils für alle an ein und derselben Matrixeingangsleitung (Spaltenleitung) ..sj.. liegenden Koppelelementpaare ein gemeinsamer und damit matrixeingangsleitungs-individueller Abtast-Transistor (Tnaj in FIG 3) vorgesehen sein, oder es kann, wie die aus FIG 4 ersichtlich ist, jeweils ein allen an ein und derselben Matrixausgangsleitung (Zeilenleitung) ...zi... liegenden Koppelelementepaaren gemeinsamer und damit matrixausgangsleitungs-individueller Abtast-Transistor (Tnai in FIG 4) vorgesehen sein. Dabei kann, wie dies aus FIG 3 ersichtlich wird, neben einem matrixeingangsleitungs-individuellen Abtast-Transistor Tnaj ein matrixeingangsleitungs-individueller Vorlade-Transistor Tpaj vorgesehen sein, und es kann, wie dies aus FIG 4 ersichtlich wird, neben einem matrixausgangsleitungs-individuellen Abtast-Transistor Tnai ein matrixausgangsleitungs-individueller Vorlade-Transistor Tpai vorgesehen sein.

Wie dies auch in FIG 2 bis FIG 4 angedeutet ist, können - bei in CMOS-Technik gehaltener Koppelpunktmatrix - die Schalter-Transistoren Tnk, die Vorschalt-Transistoren Tne und Abtast-Transistoren Tna n-Kanal-Transistoren sein und die Vorlade-Transistoren Tpi p-Kanal-Transistoren. Vorlade-Transistoren Tpi und Abtast-Transistoren Tna sind gegensinnig zueinander jeweils an ihrer Steuerelektrode mit einem eine Bit-Durchschaltezeitspanne in in FIG 5, unten, angedeuteter Weise in eine Vorphase pv und eine Hauptphase ph unterteilenden Takt T beaufschlagt, wie er in FIG 5 in Zeile T angedeutet ist.

Während der Vorphase pv (siehe FIG 5, unten) werden jeweils die beiden Signalleiter (zi′,zi˝) der Matrixausgangsleitungen (Zeilenleitungen) ...zi... über den jeweiligen Vorlade-Transistor (Tpi′ bzw. Tpi˝ in FIG 2 bis FIG 4) zumindest angenähert auf das U_{DD}-Betriebspotential geladen, wozu die im Beispiel durch p-Kanal-Transistoren gebildeten Vorlade-Transistoren Tpi′, Tpi˝ im Beispiel durch ein "Low"-Taktsignal T (siehe FIG 5, Zeile T) leitend gemacht werden.
Dabei wird mit der fallenden Flanke des Taktsignals T zugleich auch der zwischen den beiden Signalleitern zi′, zi˝ liegende Quertransistor Tpi‴ leitend mit der Folge eines Kurzschlusses der beiden Signalleiter zi′, zi˝, aufgrund dessen es zu Beginn der Vorphase sehr schnell (Zeitpunkt t1 in FIG 5, Zeile zi) zunächst einmal zu einem Potentialausgleich der beiden Signalleiter zi′, zi˝ kommt; danach werden dann beide (nun potentialmäßig ausgeglichene) Signalleiter zi′, zi˝ über die beiden Vorlade-Transistoren Tpi′, Tpi˝ auf das U_{DD}-Betriebspotential hin geladen, wobei sich die Ladedauer insgesamt dadurch verkürzt, daß nach dem durch den Quertransistor Tpi‴ herbeigeführten Potentialausgleich nun beide Vorlade-Transistoren Tpi′, Tpi˝ in den Aufladungsvorgang einbezogen sind.

Zugleich mit der Entriegelung der Vorlade-Transistoren Tpi′, Tpi˝ und des Quertransistors Tpi‴ werden die durch n-Kanal-Transistoren gebildeten Abtast-Transistoren Tna (Tnaj in FIG 2, Tnaj in FIG 3, Tnai in FIG 4) im Beispiel durch das gleiche "Low"-Taktsignal T im entgegengesetzten Sinne ausgesteuert, d.h. gesperrt, so daß die Aufladung der jeweils beiden Signalleiter (zi′, zi˝) der Matrixausgangsleitungen (Zeilenleitungen) ...zi... unabhängig von der Ansteuerung der jeweiligen Schalter-Transistoren Tnk′,Tnk˝ (in FIG 2 bis FIG 4) und der jeweiligen Vorschalt-Transistoren Tne′,Tne˝ (in FIG 2 bis FIG 4) der einzelnen Koppelelementepaare ...Kij... vor sich gehen kann. Auf der jeweiligen Matrixeingangsleitung (Spaltenleitung) ...sj... kann sich dabei ggf. schon das dem jeweils durchzuschaltenden Bit entsprechende Potential aufbauen (bzw. beibehalten werden), wie dies Zeile sj in FIG 5 verdeutlicht.
Ist neben einem matrixeingangsleitungs-individuellen Abtast-Transistor Tnaj ein matrixeingangsleitungs-individueller Vorlade-Transistor Tpaj vorgesehen, wie dies in FIG 3 dargestellt ist, oder ist neben einem matrixausgangsleitungs-individuellen Abtast-Transistor Tnai ein matrixausgangsleitungs-individueller Vorlade-Transistor Tpai vorgesehen, wie dies in FIG 4 dargestellt ist, so wird während der Vorphase pv über diesen Vorlade-Transistor (Tpaj in FIG 3; Tpai in FIG 4) die Pseudo-Masseleitung PM aufgeladen, womit das jeweilige Koppelelementepaar ...Kij... insoweit entlastet wird. Dies führt insbesondere bei umfangreichen Koppelpunktmatrizen mit einer Vielzahl von an die Pseudo-Masseleitung PM angeschlossenen Koppelelementepaaren ...Kij... zu einer merklichen Ladezeitverkürzung, die ihrerseits voll in eine entsprechende Erhöhung der Arbeitsgeschwindigkeit eingeht.

Aufgrund der durch den Quertransistor Tpi‴ herbeigeführten Potentialgleichheit der beiden Signalleiter zi′, zi˝ sind die Anfangsbedingungen für eine sichere Verstärkung durch den Differenzverstärker Ai (in FIG 1) entsprechend früher gegeben, so daß bereits zu einem entsprechend früheren Zeitpunkt die darauffolgende Hauptphase ph (siehe FIG 5, unten) einsetzen kann. In dieser Hauptphase ph (siehe FIG 5, unten), werden im Beispiel durch ein "High"-Taktsignal T (siehe FIG 5 Zeile T) Vorlade-Transistoren Tpi′,Tpi˝ und Quertransistor Tpi‴ (in FIG 2 bis FIG 4) gesperrt und zugleich die Abtast-Transistoren Tna (Tnaij in FIG 2, Tnaj in FIG 3, Tnai in FIG 4) entriegelt. Sind nun in einem Koppelelementepaar ...Kij... dessen im Beispiel durch n-Kanal-Transistoren gegebene Schalt-Transistoren Tnk′,Tnk˝ (in FIG 2 bis FIG 4) aufgrund eines am Steuereingang s anliegenden (im Beispiel "High"-) Durchschaltesignals (siehe FIG 5, Zeile s) leitend und befindet sich damit der Koppelpunkt im Durchschaltezustand, so werden jetzt je nach den dem durchzuschaltenden Bit entsprechenden, auf den beiden Signalleitern sj′,sj˝ der betreffenden Matrixeingangsleitung (Spaltenleitung) ...sj... herrschenden Signalzuständen die Signalleiter zi′,zi˝ der mit dieser Matrixeingangsleitung (Spaltenleitung) ... sj... über das betreffende Koppelelement ..Kij.. verbundene Matrixausgangsleitung (Zeilenleitung) ...zi... entladen werden bzw. auf dem in der Vorphase pv angenommenen U_{DD}-Potential verbleiben:
Herrscht auf einem Signalleiter sj′ bzw. sj˝ der betreffenden Matrixeingangsleitung (Spaltenleitung) sj der "Low"- Signalzustand und ist dementsprechend der (n-Kanal-)Vorschalt-Transistor Tne′ bzw. Tne˝ (in FIG 2 bis FIG 4) des betreffenden Koppelelementepaares Kij gesperrt, so wird der betreffende Signalleiter zi′ bzw. zi˝ der Matrixausgangsleitung (Zeilenleitung) zi über das betreffende Koppelelement dieses Koppelelementepaares Kij nicht entladen, sondern behält, sofern kein anderer zu dieser Matrixausgangsleitung (Zeilenleitung) zi führender Koppelpunkt sich im Durchschaltezustand befindet, den U_{DD}-Potentialzustand bei.

Herrscht dagegen auf einem gerade betrachteten Signalleiter sj′ bzw. sj˝ der Matrixeingangsleitung (Spaltenleitung) sj der "High"-Signalzustand und ist dementsprechend der Vorschalt-Transistor Tne′ bzw. Tne˝ (in FIG 2 bis FIG 4) des betrachteten Koppelelementepaares Kij ebenso wie der Schalter-Transistor Tnk′ bzw. Tnk˝ und der zugehörige Abtast-Transistor Tna leitend, so wird der zugeordnete Signalleiter zi′ bzw. zi˝ der Matrixausgangsleitung (Zeilenleitung) zi über dieses Koppelelement des Koppelelementepaares Kij entladen und auf das U_{SS}-Potential gezogen.

Über einen von seinem Steuereingang s her entriegelten Koppelpunkt wird somit das jeweilige Eingangssignal jeweils invertiert durchgeschaltet.

In den im vorstehenden anhand von FIG 2 bis FIG 4 erläuterten Ausführungsbeispielen sind die Vorlade-Transistoren (Tpi′,Tpi˝) durch p-Kanal-Transistoren gebildet, wobei diese p-Kanal-Vorlade-Transistoren (Tpi) und die durch n-Kanal-Transistoren gebildeten Abtast-Transistoren (Tna), durch den unterschiedlichen Kanaltypus bedingt, durch ein und dasselbe Signal (T) gegensinnig zueinander gesteuert werden. In Abweichung hiervon ist es aber auch möglich, die Vorlade-Transistoren mit n-Kanal-Transistoren zu realisieren, so daß, wenn auch die Schalter-Transistoren (Tnk), die Vorschalt-Transistoren (Tne) und die Abtast-Transistoren (Tna) n-Kanal-Transistoren sind, nur Transistoren ein und desselben Kanaltyps zur Anwendung kommen; damit dann Vorlade-Transistoren und Abtast-Transistoren wiederum gegensinnig zueinander jeweils an ihrer Steuerelektrode mit dem Koppelfeld-Ansteuer-Takt beaufschlagt werden, ist den Abtast-Transistoren (Tna) wiederum, wie in den anhand von FIG 2 bis FIG 4 beschriebenen Ausführungsbeispielen, das Koppelfeld-Ansteuer-Taktsignal (T) direkt zuzuführen, den (n-Kanal-)Vorlade-Transistoren dagegen das invertierte Koppelfeld-Ansteuer-Taktsignal.

## Patentansprüche

1. Breitbandsignal-Koppeleinrichtung mit einer Koppelpunktmatrix in FET-Technik, die jeweils mit zwei Signalleitern (sj′, sj") gebildete Matrixeingangsleitungen (sj) aufweist, deren jeweils beiden Signalleiter (sj′,sj˝) einerseits jeweils an die beiden Differenz-(Komplementär-)ausgänge einer zwei solche Differenz-(Komplementär-)ausgänge aufweisenden Eingangsdigitalsignalschaltung (Ej) angeschlossen sind und andererseits über die mit Koppelelementpaaren (Kij) gebildeten Koppelpunkte (Kpij) mit ebenfalls jeweils mit zwei Signalleitern (zi′, zi˝) gebildeten Matrixausgangsleitungen (zi) verbindbar sind, die jeweils mit ihren beiden Signalleitern (zi′, zi˝) zu den beiden Signaleingängen einer mit einem Differenzverstärker mit Kippverhalten gebildeten Ausgangsverstärkerschaltung (Ai) führen,
wobei die Koppelelementpaare (Kij) jeweils mit zwei jeweils an der Steuerelektrode mit einem Durchschalte- bzw. Sperrsignal beaufschlagten und mit einer Hauptelektrode an den einen bzw. anderen Signalleiter (zi′, zi˝) der zugehörigen Matrixausgangsleitung (zi) angeschlossenen Schalter-Transistoren (Tnk′, Tnk˝) gebildet sind,
wobei die Koppelelementpaare (Kij) jeweils zwei jeweils mit einem Schalter-Transistor (Tnk′, Tnk˝) eine Serienschaltung bildende Vorschalt-Transistoren (Tne′, Tne˝) aufweisen,
die jeweils mit der Steuerelektrode an den einen bzw. den anderen Signalleiter (sj′, sj˝) der zugehörigen Matrixeingangsleitung (sj) angeschlossen sind und deren jeweilige der Serienschaltung abgewandte Hauptelektrode über einen Abtast-Transistor (Tna) mit dem einen Anschluß (U_{SS}, Masse) der Betriebsspannungsquelle verbunden ist, mit deren anderen Anschluß (U_{DD}) jeder Signalleiter (zi′, zi˝) der jeweiligen Matrixausgangsleitung (zi) jeweils über einen Vorlade-Transistor (Tpi′, Tpi˝) verbunden ist,
und wobei Vorlade-Transistoren (Tpi′, Tpi˝) und Abtast-Transistor (Tna) gegensinnig zueinander jeweils an ihrer Steuerelektrode mit einem eine Bit-Durchschaltezeitspanne in eine Vorladephase (pv) und die eigentliche Durchschaltephase (ph) unterteilenden Koppelfeld-Ansteuer-Takt (T) beaufschlagt sind, so daß in jeder Vorphase (pv) bei) gesperrtem Abtast-Transistor (Tna) beide Signalleiter der Matrixausgangsleitung (zi) über den jeweiligen Vorlade-Transistor (Tpi′, Tpi˝) zumindest angenähert auf das an dem genannten anderen Anschluss (U_{DD}) der Betriebsspannungsquelle herrschende Potential geladen werden,
**dadurch gekennzeichnet,**
daß die beiden Vorlade-Transistoren (Tpi′, Tpi˝) an ihren der jeweiligen Matrixausgangsleitung (zi) zugewandten Hauptelektroden miteinander über einen Quertransistor (Tpi‴) verbunden sind, dessen Steuerelektrode mit den Steuerelektroden der Vorlade-Transistoren (Tpi′, Tpi˝) verbunden ist.

2. Breitbandsignalkoppeleinrichtung nach Anspruch 1,
**dadurch gekennzeichnet,**
daß neben einem matrixeingangsleitungs-individuellen Abtast-Transistor (Tnaj) ein matrixeingangsleitungs-individueller Vorlade-Transistor (Tpaj) vorgesehen ist.

3. Breitbandsignal-Koppeleinrichtung nach Anspruch 1,
**dadurch gekennzeichnet,**
daß neben einem matrixausgangsleitungs-individuellen Abtast-Transistor (Tnai) ein matrixausgangsleitungs-individueller Vorlade-Transistor (Tpai) vorgesehen ist.

## Claims

1. Wideband signal switching apparatus having a crosspoint matrix in FET technology, which exhibits matrix input lines (sj) which are formed in each instance with two signal conductors (sj', sj'') and the two signal conductors (sj', sj'') of which, in each instance, on the one hand are connected in each instance to the two differential (complementary) outputs of an input digital signal circuit (Ej) exhibiting two such differential (complementary) outputs and, on the other hand, are connectable via the crosspoints (KPij), formed with pairs of switching elements (Kij), to matrix output lines (zi), which are likewise formed in each instance with two signal conductors (zi', zi'') and which lead in each instance, by their two signal conductors (zi', zi''), to the two signal inputs of an output amplifier circuit (Ai) formed with a differential amplifier having a trigger behaviour, in which the pairs of switching elements (Kij) are formed in each instance with two switching transistors (Tnk', Tnk''), which are acted upon in each instance at the control electrode by a through-connection or block signal and which are connected by a main electrode to the one or the other signal conductor (zi', zi'') of the associated matrix output line (zi), in which the pairs of switching elements (Kij) exhibit in each instance two input transistors (Tne', Tne'') which form in each instance, with a switching transistor (Tnk', Tnk''), a series circuit and which are connected in each instance, by the control electrode, to the one or to the other signal conductor (sj', sj'') of the associated matrix input line (sj) and the respective main electrode of which, which is averted from the series circuit, is connected via a sampling transistor (Tna) to the one connection (U_{SS}, earth) of the operating voltage source, to the other connection (U_{DD}) of which each signal conductor (zi', zi'') of the respective matrix output line (zi) is connected in each instance via a precharging transistor (Tpi', Tpi''), and in which precharging transistors (Tpi', Tpi'') and sampling transistor (Tna) are acted upon in opposite sense to one another in each instance at their control electrode, by a switching field drive clock (T) subdividing a bit through-connection time interval into a precharging phase (pv) and the actual through-connection phase (ph), so that in each prephase (pv) when the sampling transistor (Tna) is blocked, the two signal conductors of the matrix output line (zi) are charged via the respective precharging transistor (Tpi', Tpi'') at least approximately to the potential existing at said other connection (U_{DD}) of the operating voltage source, characterized in that the two precharging transistors (Tpi', Tpi'') are connected to one another, at their main electrodes facing the respective matrix output line (zi), via a shunt transistor (Tpi'''), the control electrode of which is connected to the control electrodes of the precharging transistors (Tpi', Tpi'').

2. Wideband signal switching apparatus according to Claim 1, characterized in that, in addition to a sampling transistor (Tnaj) which is individual to the matrix input line, there is provided a precharging transistor (Tpaj) which is individual to the matrix input line.

3. Wideband signal switching apparatus according to Claim 1, characterized in that, in addition to a sampling transistor (Tnai) which is individual to the matrix output line, there is provided a precharging transistor (Tpai) which is individual to the matrix output line.

## Revendications

1. Dispositif de couplage de signaux à large bande, comportant une matrice de points de couplage en technique FET, qui comporte des lignes d'entrée de matrice (sj) formées respectivement par deux conducteurs de signaux (sj', sj''), et dont respectivement les deux conducteurs de signaux (sj', sj'') sont reliés, d'une part, aux deux sorties (complémentaires) différentielles d'un circuit (Ej) de signaux numériques d'entrée comportant deux telles sorties (complémentaires) différentielles, et qui peuvent être reliés, d'autre part, et par l'intermédiaire des points de couplage (KPij) formés par des couples d'éléments de couplage (Kij), à des lignes de sortie de matrice (zi) qui sont respectivement formées également par deux conducteurs de signaux (zi', zi'') et qui mènent, par leurs deux conducteurs de signaux (zi', zi''), aux deux entrées de signaux d'un circuit amplificateur de sortie (Ai), formé par un amplificateur différentiel à basculement,
du type dans lequel les couples d'éléments de couplage (Kij) sont formés par deux transistors de commutation (Tnk', Tnk''), qui sont chargés, au niveau des électrodes de commande, par un signal d'interconnexion ou de blocage et qui sont reliés à une électrode principale, au niveau de l'un ou de l'autre des conducteurs de signaux (zi', zi'') de la ligne de sortie de matrice (zi) associée,
du type dans lequel les couples d'éléments de couplage (Kij) comportent respectivement deux transistors amont (Tne', Tne'') formant, avec un transistor de commutation (Tnk', Tnk''), un circuit série,
transistors amont qui sont reliés, par l'électrode de commande, à l'un ou à l'autre des conducteurs de signaux (sj', sj'') de la ligne d'entrée de matrice (sj) associée, et dont l'électrode principale respective, tournée à l'opposé de circuit série, est reliée, par l'intermédiaire d'un transistor d'échantillonnage (Tna), à l'une des bornes (U_{SS},Masse) de la source de tension de service, à l'autre borne (U_{DD}) de laquelle chaque conducteur de signaux (zi', zi'') de la ligne de sortie de matrice (zi) respective est relié, par l'intermédiaire d'un transistor de précharge (Tpi', Tpi''), et
du type dans lequel les transistors de précharge (Tpi', Tpi'') et un transistor d'échantillonnage (Tna) sont chargés dans des sens opposés les uns par rapport aux autres, au niveau de leurs électrodes de commande, par une cadence (T) de commande du champ de couplage divisant un intervalle de temps de commutation de bits, en une phase de précharge (pv) et en la phase d'interconnexion particulière (ph), de telle sorte que dans chaque préphase (pv), et dans le cas où le transistor d'échantillonnage (Tna) est bloqué, les deux conducteurs de signaux de la ligne de sortie de matrice (zi) sont chargés, par l'intermédiaire du transistor de précharge respectif (Tpi', Tpi'') de manière au moins approximative, par le potentiel régnant à ladite autre borne (U_{DD}) de la source de tension de service,
caractérisé en ce que les deux transistors de précharge (Tpi', Tpi'') sont reliés entre eux par leur électrode principale tournée vers la ligne de sortie de matrice (zi) respective, par l'intermédiaire d'un transistor transversal (Tpi''') dont l'électrode de commande est reliée aux électrodes de commande des transistors de précharge (Tpi', Tpi'').

2. Dispositif de couplage de signaux à large bande suivant la revendication 1,
caractérisé en ce que, outre un transistor d'échantillonnage (Tnaj) individuel à chaque ligne d'entrée de matrice, il est prévu un transistor de précharge (Tpaj) individuel à chaque ligne d'entrée de matrice.

3. Dispositif de couplage de signaux à large bande suivant la revendication 1,
caractérisé en ce que, outre un transistor d'échantillonnage (Tnai) individuel à chaque ligne de sortie de matrice, il est prévu un transistor de précharge (Tpai) individuel à chaque ligne de sortie de matrice.
